# EUROPÄISCHE PATENTSCHRIFT

(11) **EP 0 955 272 B1**
(45) Veröffentlichungstag und Bekanntmachung des Hinweises auf die Patenterteilung: **27.06.2001**
(21) Anmeldenummer: 99103817.5
(22) Anmeldetag: 27.02.1999
(51) Int. Cl.: C03B 9/38

(54) **Kühlvorrichtung für zueinander bewegbare, vorzugsweise verschwenkbare, Formenhälften aufweisende Formen von Glasmaschinen**
Cooling device for moulds of a glass moulding machine comprising mould-halves which can move towards each other, preferably by swinging
Dispositif de refroidissement pour des moules d'une machine à façonner le verre ayant des demi-moules mobiles l'un par rapport à l'autre et de préférence pivotables

(30) Priorität: 30.04.1998 DE 19819489
(43) Veröffentlichungstag der Anmeldung: 10.11.1999
(73) Patentinhaber: GPS GLASPRODUKTIONS-SERVICE GMBH, 45329 Essen (DE)
(72) Erfinder: Emrath, Norbert, 45721 Haltern (DE); Krämer, Kurt, 45329 Essen (DE)
(74) Vertreter: Spalthoff, Adolf, Dipl.-Ing.

(56) Entgegenhaltungen:
- EP-A- 0 167 871
- EP-A- 0 576 745

## Beschreibung

Die Erfindung bezieht sich auf eine Kühlvorrichtung für zueinander bewegbare, vorzugsweise verschwenkbare, Formenhälften aufweisende Formen von Glasmaschinen, mit Kühlkanälen, die in den Formenhälften ausgebildet sind, und einem Kühlluftzufuhrkanal, mittels dem Kühlluft an die Form heranführbar ist.

Bei bekannten derartigen Kühlvorrichtungen (siehe z.B. EP-A-0 576 745 oder EP-A-0 167 871) besteht lediglich die Möglichkeit, die die Formen bildenden Formenhälften in der Betriebsstellung, in der jeweils zwei Formenhälften eine Form ausbilden und mit ihren einander gegenüberliegenden Kanten aneinander anliegen, zu kühlen. In dieser sogenannten Betriebs- oder Schließstellung sind die in den Formenhälften ausgebildeten Kühlkanäle an den Kühlluftzufuhrkanal angeschlossen. Kühlluft kann dann durch den Kühlluftzufuhrkanal in die formenhälftenseitigen Kühlkanäle eindringen und anfallende Wärme abtransportieren.

Der Erfindung liegt die Aufgabe zugrunde, die gattungsgemäße eingangs geschilderte Kühlvorrichtung für zueinander bewegbare, vorzugsweise verschwenkbare Formenhälften aufweisende Formen von Glasmaschinen derart weiterzubilden, daß eine Verbesserung der Wärmeabfuhr aus den Formenhälften möglich ist.

Diese Aufgabe wird erfindungsgemäß dadurch gelöst, daß die Kühlvorrichtung gemäß dem Oberbegriff des Anspruchs 1 eine Festplatte, die fest am formenseitigen Ende des Kühlluftzufuhrkanals angeordnet ist, und Schieberplatten aufweist, die fest am kühlluftzufuhrkanalseitigen Ende der Formenhälften angeordnet sind und im Zusammenwirken mit der Festplatte für jede Formenhälfte eine Kanalverbindung ausbilden, mittels der jede Formenhälfte in ihrer Betriebsstellung und in ihrer von der ihr zugeordneten Formenhälfte entfernten Stillstandsstellung mit Kühlluft beaufschlagbar ist. Mittels dieser variablen Kanalverbindung, die sowohl in der Betriebsstellung der Formenhälften als auch in deren voneinander entfernten Stillstandsstellung einen Anschluß zwischen dem Kühlluftzufuhrkanal und den formenhälftenseitigen Kühlkanälen schafft, kann eine aktive Kühlung der Formenhälften über einen längeren Zeitraum als beim Stand der Technik aufrecht erhalten werden, so daß eine weitere Verkürzung der Taktzeiten sowie auch verbesserte Artikel-Qualitäten möglich sind.

Aufgrund unterschiedlicher Ausgestaltungen der mit den Formenhälften fest verbundenen Schieberplatten kann die Kühlluftbeaufschlagung der Formenhälften an die jeweils gefertigten Artikel angepaßt werden. Die für die Formenhälften erreichbaren Standzeiten werden erhöht, wobei sich darüber hinaus verbesserte Artikel-Qualitäten ergeben.

Gemäß einer vorteilhaften Ausführungsform der erfindungsgemäßen Kühlvorrichtung sind die Kanalverbindungen so ausgebildet, daß jede Formenhälfte während ihrer Bewegung zwischen ihrer Betriebs- und ihrer Stillstandsstellung mit Kühlluft beaufschlagbar ist. Somit können die Formenhälften bzw. deren Kühlkanäle permanent mit Kühlluft beaufschlagt werden.

In konstruktiv-technisch wenig aufwendiger Weise lassen sich die Kanalverbindungen zwischen dem Kühlluftzufuhrkanal und den formenhälftenseitigen Kühlkanälen bewerkstelligen, indem jede Schieberplatte einen in Richtung auf die Festplatte vorstehenden Außenrand aufweist, der in jeder Position der Schieberplatte einen der Schieberplatte zugeordneten Kanaldurchtritt der Festplatte umgibt. Durch den Kanaldurchtritt der Festplatte kann dann die Kühlluft kontinuierlich aus dem Kühlluftzufuhrkanal in den Zwischenraum zwischen der Festplatte und der dem betreffenden Kanaldurchtritt zugeordneten Schieberplatte eintreten, wobei unabhängig von der Position der Schieberplatte durch in dieser vorgesehene Kanalöffnungen die Kühlluft in die der Schieberplatte zugeordneten Formenhälften eintreten kann.

Zur weitestgehenden Vermeidung von Kühlluftverlusten ist es zweckmäßig, wenn der in Richtung auf die Festplatte vorstehende Außenrand der Schieberplatte dicht an der Festplatte anliegt. Dies kann beispielsweise mittels einer geeigneten Dichtungsvorrichtung bewerkstelligt werden.

Es ist möglich, jeder Schieberplatte zumindest zwei gemeinsam bewegbare Formenhälften zuzuordnen, wobei dann die betreffende Schieberplatte eine Anzahl von Kanalöffnungen aufweist, die derjenigen der ihr zugeordneten Formenhälften entspricht.

Im folgenden wird die Erfindung an Hand einer Ausführungsform unter Bezugnahme auf die Zeichnung näher erläutert.

Es zeigen:
- Figur 1: eine teilweise geschnittene Seitenansicht der erfindungsgemäßen Kühlvorrichtung; und
- Figur 2: eine Draufsicht auf die in Figur 1 dargestellte erfindungsgemäße Kühlvorrichtung.

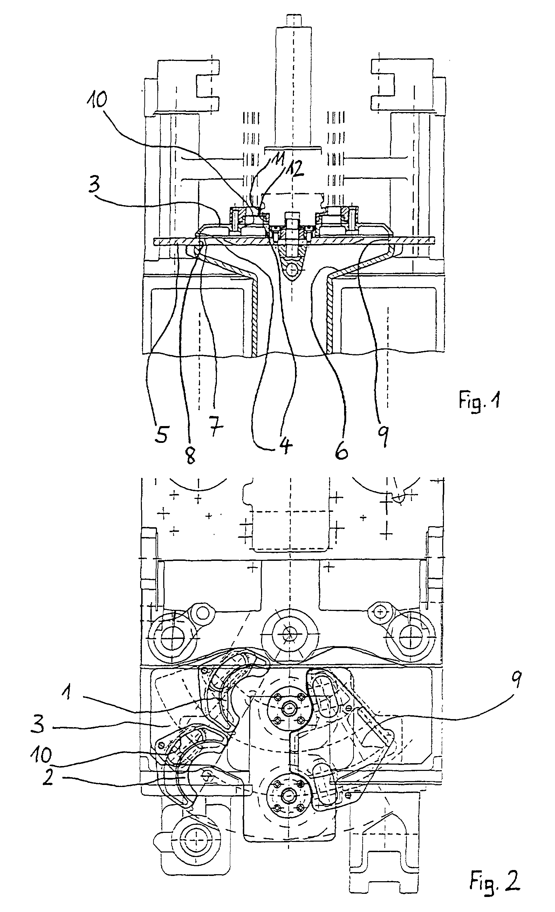

Eine an Hand der Figuren 1 und 2 beispielhaft dargestellte Ausführungsform einer erfindungsgemäßen Kühlvorrichtung dient dazu, Formenhälften 1, 2 von Formen einer IS-Glasmaschine mit Kühlluft zu beaufschlagen. In den Figuren 1 und 2 sind die für die Funktion der Kühlvorrichtung wesentlichen Bestandteile der Form einer IS-Glasmaschine darstellt.

Bei der dargestellten Ausführungsform bestehen die Formen aus jeweils zwei zueinander verschwenkbaren Formenhälften 1 bzw. 2, von denen in Figur 2 die beiden linken Formenhälften 1 und 2 dargestellt sind. Die beiden linken Formenhälften 1 und 2 sitzen auf einer ihnen gemeinsamen Schieberplatte 3, die einen nach unten vorstehenden Außenrand 4 aufweist. Dieser Außenrand 4 steht in Richtung auf eine Festplatte 5 vor, gegen die er bei einer vorteilhaften Ausführungsform der Erfindung mittels einer Dichtung 7 abgedichtet ist. Die Festplatte 7 ist am oberen Ende eines die in Figur 2 dargestellten Formenhälften 1, 2 und diesen zugeordnete Formenhälften mit Kühlluft versorgenden Kühlluftzufuhrkanals 6 fest angebracht. In der Festplatte 5 sind Kanaldurchtritte 8, 9 ausgebildet, wobei der in den Figuren 1 und 2 links dargestellte Kanaldurchtritt 8 in sämtlichen Positionen der die in Figur 2 dargestellten Formenhälften 1, 2 aufweisenden Schieberplatte 3 von der Schieberplatte 3 abgedeckt ist, wobei er sich jeweils innerhalb des in Richtung auf die Festplatte 5 vorstehenden Außenrands 4 der Schieberplatte 3 befindet.

Entsprechend wird der in Figur 1 und 2 rechts dargestellte Kanaldurchtritt 9 von einer ihm analog zugeordneten Schieberplatte in sämtlichen Positionen der mit dieser Schieberplatte verbundenen Formenhälften überdeckt.

Die Kanalverbindung zwischen dem Kühlluftzufuhrkanal 6 und den in den Formenhälften 1, 2 ausgebildeten Kühlkanälen umfaßt desweiteren eine in der Schieberplatte 3 ausgebildete Kanalöffnung 10 sowie zu den in den Formenhälften 1, 2 ausgebildeten Kühlkanälen führende Durchtritte 11 und 12.

Aufgrund des Abstands zwischen der kühlluftzufuhrkanalseitigen Festplatte 5 bzw. deren Oberseite und der Unterseite der formenhälftenseitigen Schieberplatte 3, die zur Festplatte 5 unter Aufrechterhaltung der Abdichtung bewegbar ist, kann in jeder Position der Schieberplatte 3 bzw. der Formenhälften 1, 2 die Verbindung zwischen dem Kühlluftzufuhrkanal 6 und den formenhälftenseitigen Kühlkanälen aufrecht erhalten werden. Somit können die Formenhälften 1, 2 sowohl in der Betriebsstellung der Formenhälften als auch in der in Figur 2 dargestellten, verschwenkten Stillstandsstellung der Formenhälften 1, 2 als auch während der Bewegung zwischen der Betriebs- und der Stillstandsstellung der Formenhälften 1, 2 aufrecht erhalten werden. Hierdurch kann praktisch permanent Wärme von den stark wärmebeaufschlagten Formenhälften abtransportiert werden, wodurch die Taktzeiten an den Formen einer entsprechenden IS-Glasmaschine verkürzt werden können. Darüber hinaus sind durch Einsatz der erfindungsgemäßen Kühlvorrichtung verbesserte Artikel-Qualitäten möglich.

## Patentansprüche

1. Kühlvorrichtung für zueinander bewegbare, vorzugsweise verschwenkbare Formenhälften (1, 2) aufweisende Formen von Glasmaschinen, mit Kühlkanälen, die in den Formenhälften (1, 2) ausgebildet sind, und einem Kühlluftzufuhrkanal (6), mittels dem die Kühlluft an die Form heranführbar ist, gekennzeichnet durch eine Festplatte (5), die fest am formenseitigen Ende des Kühlluftzufuhrkanals (6) angeordnet ist, und Schieberplatten (3), die fest am kühlluftzufuhrkanalseitigen Ende der Formenhälften (1, 2) angeordnet sind und im Zusammenwirken mit der Festplatte (5) für jede Formenhälfte (1, 2) eine Kanalverbindung (8, 10, 11, 12) ausbilden, mittels der jede Formenhälfte (1, 2) in ihrer Betriebsstellung und in ihrer von der ihr zugeordneten Formenhälfte entfernten Stillstandsstellung mit Kühlluft beaufschlagbar ist.

2. Kühlvorrichtung nach Anspruch 1, deren Kanalverbindungen (8, 10, 11, 12) so ausgebildet sind, daß jede Formenhälfte (1, 2) während ihrer Bewegung zwischen ihrer Betriebs- und ihrer Stillstandsstellung mit Kühlluft beaufschlagbar ist.

3. Kühlvorrichtung nach Anspruch 1 oder 2, bei der jede Schieberplatte (3) einen in Richtung auf die Festplatte (5) vorstehenden Außenrand (4) aufweist, der in jeder Position der Schieberplatte (3) einen der Schieberplatte (3) zugeordneten Kanaldurchtritt (8, 9) der Festplatte (5) umgibt.

4. Kühlvorrichtung nach Anspruch 3, bei der der in Richtung auf die Festplatte (5) vorstehende Außenrand (4) der Schieberplatte (3) dicht an der Festplatte (5) anliegt.

5. Kühlvorrichtung nach einem der Ansprüche 1 bis 4, bei der jeder Schieberplatte (3) zumindest zwei gemeinsam bewegbare Formenhälften (1, 2) zugeordnet sind.

## Claims

1. Cooling apparatus for moulds of glass-making machines, which moulds have mould halves (1, 2) which are movable towards each other and which are preferably pivotable, having cooling channels, which are formed in the mould halves (1, 2), and a cooling air supply channel (6), by means of which the cooling air can be fed to the mould, characterised by a stationary plate (5), which is arranged in a fixed manner at the end of the cooling air supply channel (6) that is at the location of the mould, and sliding plates (3), which are arranged in a fixed manner at the end of the mould halves (1, 2) that is at the location of the cooling air supply channel and which form, in conjunction with the stationary plate (5), a channel connection (8, 10, 11, 12) for each mould half (1, 2), by means of which channel connection (8, 10, 11, 12) each mould half (1, 2) can be acted on with cooling air in the operating position thereof and in the rest position thereof, which is at a distance from the mould half associated therewith.

2. Cooling apparatus according to claim 1, whose channel connections (8, 10, 11, 12) are in such a form that each mould half (1, 2) can be acted on with cooling air during the movement thereof between the operating position and the rest position thereof.

3. Cooling apparatus according to claim 1 or claim 2, in which each sliding plate (3) has an outer rim (4) which projects in the direction towards the stationary plate (5) and which, in each position of the sliding plate (3), surrounds a channel passage (8, 9) of the stationary plate (5), which channel passage (8, 9) is associated with the sliding plate (3).

4. Cooling apparatus according to claim 3, in which the outer rim (4) of the sliding plate (3), which outer rim (4) projects in the direction towards the stationary plate (5), closely abuts the stationary plate (5).

5. Cooling apparatus according to any one of claims 1 to 4, in which at least two mould halves (1, 2), which can be moved together, are associated with each sliding plate (3).

## Revendications

1. Dispositif de refroidissement pour des moules de machines de façonnage du verre, présentant des parties de moule (1, 2) mobiles en direction l'une de l'autre, de préférence pivotantes, avec des canaux de refroidissement qui sont aménagés dans les parties de moule (1, 2) et un canal (6) d'alimentation en air de refroidissement, à l'aide duquel l'air de refroidissement peut être amené au moule, caractérisé par une plaque fixe (5) qui est fixée à l'extrémité côté moule du canal (6) d'alimentation en air de refroidissement, et des plaques (3) coulissantes qui sont fixées à l'extrémité côté canal d'alimentation en air de refroidissement des parties de moule (1, 2) et qui, en coopérant avec la plaque fixe (5), forment pour chaque partie de moule (1, 2), une liaison entre canaux (8, 10, 11, 12), à l'aide de laquelle chaque partie de moule (1, 2), dans sa position de travail et dans sa position de repos, éloignée de la partie de moule associée, peut être alimentée en air de refroidissement.

2. Dispositif de refroidissement selon la revendication 1, dans lequel les liaisons entre canaux (8, 10, 11, 12) sont agencées de manière telle, que chaque partie de moule (1, 2) peut être alimentée en air de refroidissement pendant son déplacement entre sa position de fonctionnement et sa position de repos .

3. Dispositif de refroidissement selon la revendication 1 ou 2, dans lequel chaque plaque coulissante (3) comporte un bord extérieur (4) faisant saillie en direction de la plaque fixe (5) qui, dans chaque position de la plaque coulissante (3), entoure un passage de canal (8, 9) de la plaque fixe (5) associé à la plaque coulissante (3).

4. Dispositif de refroidissement selon la revendication 3 dans lequel le bord extérieur de la plaque coulissante (3) faisant saillie en direction de la plaque fixe (5) est appliqué de manière étanche sur la plaque fixe (3).

5. Dispositif de refroidissement selon une des revendications 1 à 4, dans lequel au moins deux parties de moule (1, 2) déplaçables conjointement sont associées à chaque plaque coulissante (3).
